**Europäisches Patentamt**

(19) **European Patent Office**

**Office européen des brevets**

(11) Veröffentlichungsnummer: **0 016 922**
**B1**

(12) **EUROPÄISCHE PATENTSCHRIFT**

(45) Veröffentlichungstag der Patentschrift:
08.06.83

(51) Int. Cl.³: **H 04 N 5/06,** H 04 N 5/10, H 04 N 5/08

(21) Anmeldenummer: **80100485.4**

(22) Anmeldetag: **31.01.80**

(54) Synchronisierschaltung für Videotaktoszillatoren.

(30) Priorität: **16.03.79 CH 2498/79**

(43) Veröffentlichungstag der Anmeldung:
**15.10.80 Patentblatt 80/21**

(45) Bekanntmachung des Hinweises auf die Patenterteilung:
**08.06.83 Patentblatt 83/23**

(84) Benannte Vertragsstaaten:
**AT DE FR GB IT NL SE**

(56) Entgegenhaltungen:
**DE-A-1 950 707**
**DE-B-1 197 120**
**FR-A-2 392 564**
**GB-A-1 049 507**
**US-A-2 686 833**
**US-A-3 435 141**
**US-A-3 555 185**
**US-A-3 628 159**

**INSTITUTE OF ELECTRICAL AND ELECTRONICS ENGINEERS, Proceedings of the 20th electronic components conference, 13–15 Mai 1970, Washington, US, C.R. PERKINS: «Complex MOS circuit arrays», Seiten 475–479**

(73) Patentinhaber: **SIEMENS-ALBIS AKTIENGESELLSCHAFT, EGA1/Verträge und Patente Postfach, CH-8047 Zürich (CH)**

(72) Erfinder: **Burlanek, Rudolf, Schützenrain 17, CH-8047 Zürich (CH)**
Erfinder: **Tschannen, Gottfried, Seebahnstrasse 177/153, CH-8004 Zürich (CH)**

ACTORUM AG

## Synchronisierschaltung für Videotaktoszillatoren

Die vorliegende Erfindung betrifft eine Synchronisierschaltung für Videotaktoszillatoren gemäss dem Oberbegriff des Patentanspruches 1.

Eine beispielsweise aus der DE-AS 1 197 120 bekannte Synchronisierschaltung kann zur Synchronisierung eines Fernseh-Bildsignalgebers, insbesondere auch bei Präzisions-Offset-Betrieb und bei Farbfernsehübertragungen, eingesetzt werden. Eine solche Synchronisierschaltung ist jedoch nicht ohne weiteres geeignet, die aus verschiedenen Videoaufnahmegeräten kommenden Videosignale untereinander derart zu synchronisieren, dass eine Überlagerung von Videobildern auf einem Bildschirm möglich ist.

Zu diesem Zweck können alle Videoaufnahmegeräte gemeinsam mit Hilfe der Synchronisiersignale aus ein und derselben Synchronisiertaktquelle synchronisiert sein, welche ein Mischimpulssignal oder ein Horizontalimpulssignal zusammen mit einem Vertikalimpulssignal abgibt. Diese einfache Methode zur Synchronisierung von Videobildern erweist sich jedoch als undurchführbar, wenn man ein nicht extern synchronisierbares Videoaufnahmegerät verwenden möchte oder wenn das Synchronisierungsproblem darin besteht, Videobilder, die zwei oder mehr verschiedenen Normen entsprechen, zu synchronisieren.

Aufgabe der Erfindung ist es, eine Synchronisierschaltung anzugeben, welche die Synchronisierung von mehreren Videoaufnahmegeräten mit einem anderen, nicht extern synchronisierten Videoaufnahmegerät erlaubt, wobei die Videobilder verschiedenen Normen entsprechen können.

Diese Aufgabe wird erfindungsgemäss mit Hilfe der im Anspruch 1 angegebenen Synchronisierschaltung gelöst, durch die eine Zeilensynchronisierung zugleich mit einer Vollbildsynchronisierung erreicht werden kann, was für die Überlagerung von Videobildern auf einem Bildschirm wichtig ist.

Die Erfindung wird durch Beschreibung von Ausführungsbeispielen anhand von Zeichnungen nachfolgend erläutert. Dabei zeigt:

Fig. 1 den prinzipiellen Aufbau einer Einrichtung nach der Erfindung,

Fig. 2 ein Zeitdiagramm für verschiedene Signale,

Fig. 3 ein Beispiel einer erfindungsgemässen Synchronisierschaltung,

Fig. 4 ein Beispiel einer Zeilenimpuls-Abtrennschaltung und einer Externbildkennimpuls-Abtrennschaltung zu dieser Synchronisierschaltung,

Fig. 5 ein Beispiel einer Nachlaufsteuerung zu dieser Synchronisierschaltung.

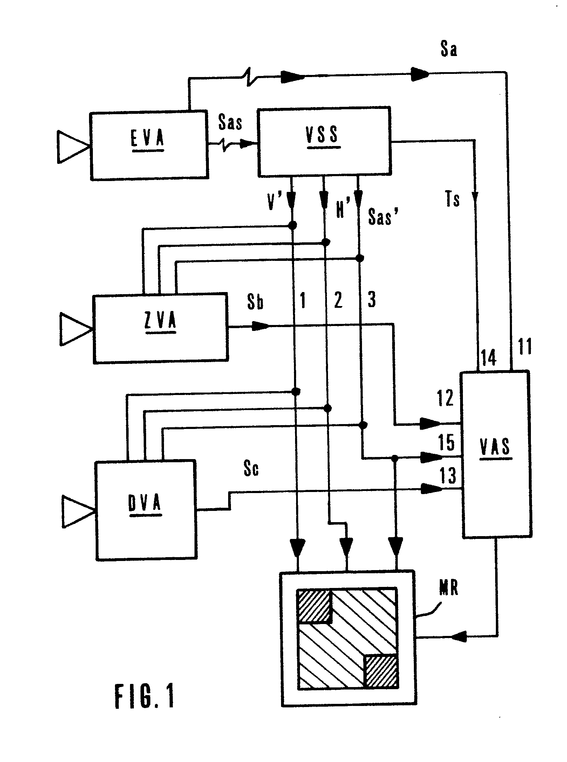

Die Einrichtung nach Fig. 1 weist eine eingangsseitig mit einem nicht extern synchronisierten ersten Videoaufnahmegerät EVA verbundene Synchronisierschaltung VSS auf, welche ausgangsseitig gemeinsam über drei Leitungen 1, 2, 3 einmal mit einem zweiten Videoaufnahmegerät ZVA, zum anderen mit einem dritten Videoaufnahmegerät DVA und schliesslich mit einem Videowiedergabegerät MR (Monitor) verbunden sein kann. Diese drei Leitungen 1, 2, 3 sind für ein Vertikalimpulssignal V', für ein Horizontalimpulssignal H' = H1', H2' bzw. für ein Mischimpulssignal Sas' vorgesehen, wobei alle drei Signale untereinander synchronisiert sind. Die Einrichtung nach Fig. 1 weist zudem eine Verarbeitungsschaltung VAS auf, deren drei erste Eingänge 11, 12, 13 je mit einem Videoausgangssignal Sa, Sb, Sc der Videoaufnahmegeräte EVA, ZVA bzw. DVA beaufschlagt sind und deren vierter, ein Taktfrequenzsignal Ts empfangender Eingang 14 mit einem weiteren Ausgang der Synchronisierschaltung VSS verbunden ist.

Die Verarbeitungsschaltung VAS weist zudem einen fünften Eingang 15 auf, der mit dem über die Synchronisierschaltung VSS geführten Mischimpulssignal Sas des ersten Videoaufnahmegerätes EVA beaufschlagt ist. Das Videowiedergabegerät MR ist über mehrere Leitungen mit der Verarbeitungsschaltung VAS verbunden.

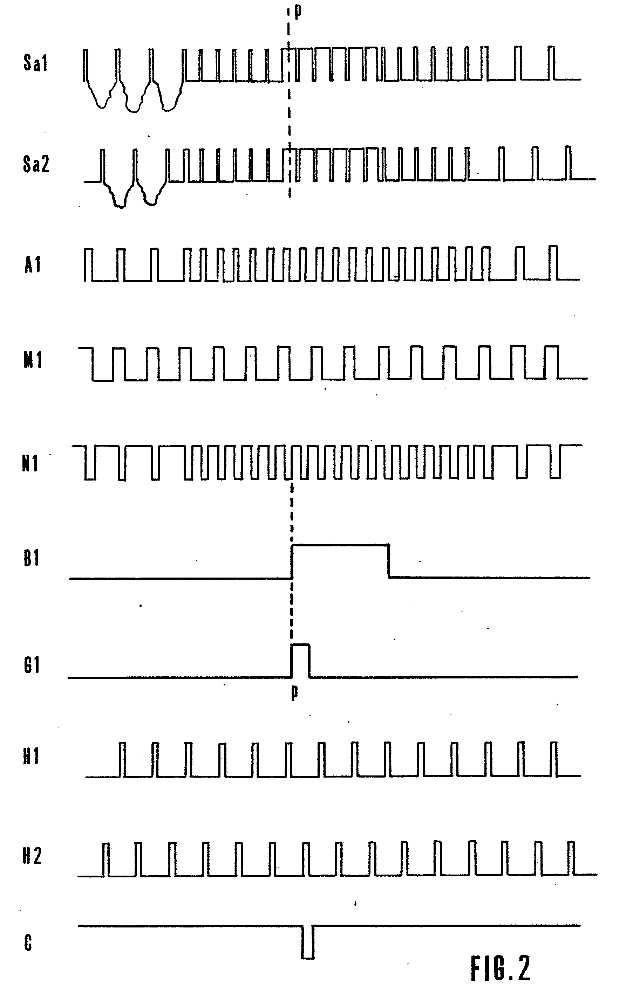

Das Eingangssignal Sas der Synchronisierschaltung VSS ist ein gewöhnliches Mischimpulssignal, beispielsweise nach CCIR-Norm, wie es in Fig. 2 in zwei sequentiellen Signalteilen Sa1 für die geradzahligen und Sa2 für die ungeradzahligen Zeilen dargestellt ist. Somit ist Sas = Sa1, Sa2. Näheres über solche Mischimpulssignale kann beispielsweise aus dem Buch: «Hütte IV B, Elektrotechnik, Teil B, Fernmeldetechnik» W. Ernst & Sohn, Berlin, 1962, Seite 1122, entnommen werden.

Das Videosignal Sa besteht aus einem Bildsignal und aus dem Mischimpulssignal Sas, bestehend aus Austastimpulsen und Synchronisierimpulsen. In Fig. 2 ist das Bildsignal als unregelmässiger Kurvenzug im unteren Bereich der Kurve Sa1 bzw. Sa2 dargestellt.

Nach Fig. 1 sind sowohl die Videoaufnahmegeräte ZVA und DVA als auch das Videowiedergabegerät an die Leitungen 1, 2, 3 angeschlossen. Für die Synchronisierung ist jedoch nur entweder das Mischimpulssignal Sas' oder das Horizontalimpulssignal H' zusammen mit dem Vertikalimpulssignal V' erforderlich.

In der Synchronisierschaltung VSS wird aus dem Mischimpulssignal Sas ein Taktfrequenzsignal Ts erzeugt. Mit Hilfe des Mischimpulssignals Sas' und gegebenenfalls des Taktfrequenzsignals Ts werden das Videosignal Sb des zweiten Videoaufnahmegerätes ZVA und das Videosignal Sc des dritten Videoaufnahmegerätes DVA synchronisiert. Die synchronisierten Videosignale Sa, Sb und Sc aus den drei Videoaufnahmegeräten EVA, ZVA, DVA können sodann in der Verarbeitungsschaltung VAS derart verarbeitet werden, dass nun eine überlagerte Darstellung der Bilder auf dem Bildschirm des Videowiedergabegerätes MR möglich ist. In der Verarbeitungsschaltung VAS kann auch eine Normumwandlung stattfinden.

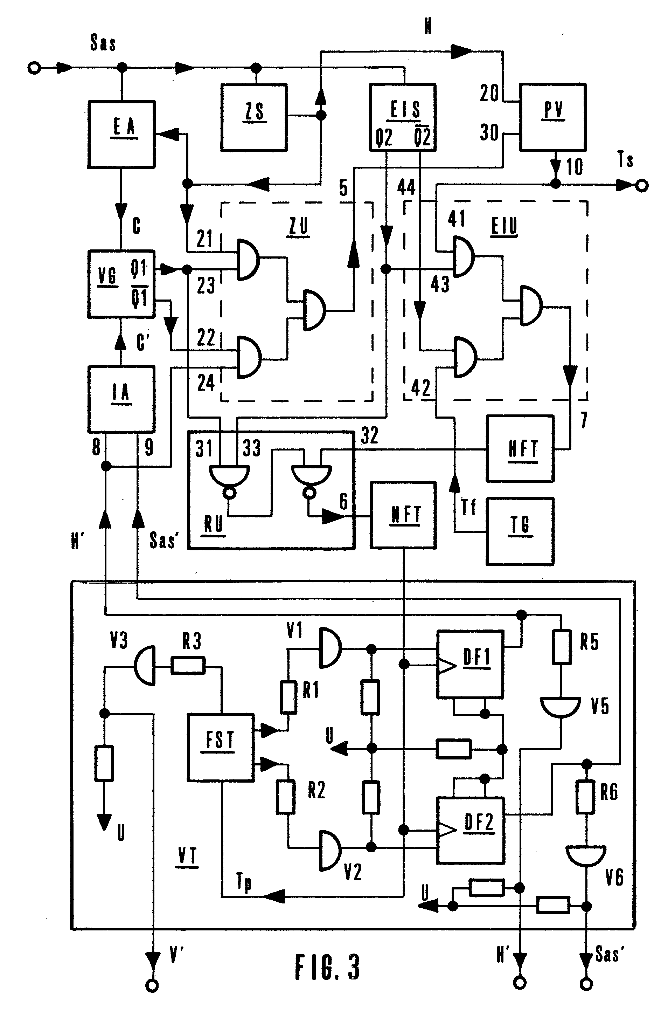

Die Synchronisierschaltung VSS nach Fig. 3 weist eine das Taktfrequenzsignal Ts abgebende Nachlaufsteuerung PV auf, deren Referenzeingang 20 mit dem Ausgang einer Zeilenimpuls-Abtrennschaltung ZS, mit dem Eingang einer Externvollbild-Kennimpuls-Abtrennschaltung EA und mit dem ersten Eingang 21 eines Zeilenimpuls-Umschalters ZU und deren Vergleichseingang 30 mit dem Ausgang 5 dieses Zeilenimpuls-Umschalters ZU verbunden ist, wobei beide Abtrennschaltungen ZS und EA eingangsseitig mit dem Mischimpulssignal Sas beaufschlagt sind.

Die Externvollbild-Kennimpuls-Abtrennschaltung EA ist ausgangsseitig mit dem Eingang eines Vergleichers VG verbunden, dessen invertiertes Ausgangssignal Q1 dem zweiten Eingang 22 und dessen nicht invertiertes Ausgangssignal Q1 dem dritten Eingang 23 des Zeilenimpuls-Umschalters ZU zugeführt ist, und dessen zweiter Eingang mit dem Ausgangssignal C′ einer Internvollbild-Kennimpuls-Abtrennschaltung IA beaufschlagt ist, wobei das nicht invertierte Ausgangssignal Q1 des Vergleichers VG zudem dem ersten Eingang 31 eines Regelimpuls-Schalters RU zugeführt ist, dessen Ausgang 6 über einen NF-Teiler NFT mit dem Takteingang eines Video-Taktgenerators VT verbunden ist, der über drei verschiedene Ausgänge das Mischimpulssignal Sas′, das Horizontalimpulssignal H′ = H1′, H2′ bzw. das Vertikalimpulssignal V′ abgibt. Dieses Horizontalimpulssignal H′ wird dem vierten Eingang 24 des Zeilenimpuls-Umschalters ZU und dem ersten Eingang 8 der Internvollbild-Kennimpuls-Abtrennschaltung IA zugeführt, deren zweiter Eingang 9 mit dem Signal Sas′ beaufschlagt ist.

Der Ausgang 10 der Nachlaufsteuerung PV ist mit dem ersten Eingang 41 eines Extern-/Intern-Umschalters EIU verbunden, dessen zweiter Eingang 42 mit dem Ausgangssignal Tf einer Taktimpulsquelle TG beaufschlagt und dessen Ausgang 7 über einen HF-Teiler HFT mit dem zweiten Eingang 32 des Regelimpuls-Schalters RU verbunden ist. Dabei ist der dritte Eingang 33 dieses Schalters RU mit dem nichtinvertierten Ausgangssignal Q2 einer Extern-/Intern-Steuerung EIS beaufschlagt und mit dem dritten Eingang 43 des Extern-/Intern-Umschalters EIU verbunden, dessen viertem Eingang 44 das invertierte Ausgangssignal Q2 dieser Steuerung EIS zugeführt ist, die eingangsseitig mit dem Mischimpulssignal Sas beaufschlagt ist.

Die Umschalter ZU und EIU sind gleich aufgebaut und weisen je zwei UND-Glieder auf, deren Ausgänge über je ein ODER-Glied zusammengefasst sind, wobei der erste Eingang 21 und der dritte Eingang 23 des Umschalters ZU die zwei Eingänge eines dieser UND-Glieder und der erste Eingang 41 und der dritte Eingang 43 des Umschalters EIU die zwei Eingänge eines anderen dieser UND-Glieder ist.

Bei den Umschaltern ZU und EIU ist daher entweder der Eingang 21 bzw. 41 offen und der Eingang 24 bzw. 42 geschlossen oder umgekehrt, so dass entweder das Signal H1, H2 oder das Signal H1′, H2′ durch den Schalter ZU und entweder das Signal Ts oder das Signal Tf durch den Schalter EIU zum Ausgang des Umschalters gelangen kann.

Der erste und dritte Eingang 31 bzw. 33 des Regelimpuls-Schalters RU sind die Eingänge eines ersten NAND-Gliedes, dessen Ausgang mit einem Eingang eines zweiten NAND-Gliedes verbunden ist, dessen anderer Eingang der zweite Eingang 32 und dessen Ausgang der Ausgang 6 des Regelimpuls-Umschalters RU ist.

Der Regelimpuls-Schalter RU sperrt den Signalfluss vom HF-Teiler HFT zum NF-Teiler NFT dann und nur dann, wenn der Zeilenimpuls-Umschalter ZU das Signal H1, H2 und der Extern-/Intern-Umschalter EIU das Signal Ts durchschaltet.

Der Videotaktgenerator VT weist einen Fernsehtaktgeber FST auf, dessen Horizontalimpulssignalausgang über die Reihenschaltung eines ersten Widerstandes R1 und eines ersten Verstärkers V1 mit dem D-Eingang einer ersten D-Kippstufe (D-Flipflop) DF1 und dessen Mischimpulssignalausgang über die Reihenschaltung eines zweiten Widerstandes R2 und eines zweiten Verstärkers V2 mit dem D-Eingang einer zweiten D-Kippstufe DF2 verbunden ist. Der Vertikalimpulssignalausgang des Fernsehtaktgebers FST ist über einen dritten Widerstand R3 mit dem Eingang eines dritten Verstärkers V3 verbunden, dessen Ausgang der Ausgang des Videotaktgenerators VT ist.

Die Synchronisierschaltung VSS nach Fig. 3 funktioniert nun folgendermassen:

In der Zeilenimpuls-Abtrennschaltung ZS werden die Zeilenimpulssignale H1 und H2 nach Fig. 2 gewonnen, wobei das Zeilenimpulssignal H1 für die geradzahligen und das Zeilenimpulssignal H2 für die ungeradzahligen Zeilen gilt.

In der Externvollbild-Kennimpuls-Abtrennschaltung EA wird aus dem jeweils ersten Bildsynchronimpuls ein gegenüber diesem verzögerter Externvollbild-Kennimpuls C nach Fig. 2 abgeleitet.

Der Video-Taktgenerator VT erzeugt ein Mischimpulssignal Sas′, das identisch mit dem Mischimpulssignal Sas am Eingang der Synchronisierschaltung VSS ist und ein Horizontalimpulssignal H′ = H1′, H2′, das identisch mit dem Horizontalimpulssignal H = H1, H2 am Ausgang der Zeilenimpuls-Abtrennschaltung ZS ist, wobei bei Inbetriebsetzen des Gerätes im nicht synchronisierten Zustand die Signale Sas′ und Sas einerseits und H′ und H anderseits zeitlich verschoben sind.

Die Internvollbild-Kennimpuls-Abtrennschaltung IA ist gleich wie die Externvollbild-Kennimpuls-Abtrennschaltung EA aufgebaut. Ihr Ausgangssignal C′ ist identisch mit dem Ausgangssignal C dieser Abtrennschaltung EA, jedoch im nicht synchronisierten Zustand gegenüber diesem zeitlich verschoben.

Der Vergleicher VG ist eine D-Kippstufe, deren D-Eingang ständig mit einem «1»-Signal, deren Taktsignaleingang mit dem Ausgangssignal C′ der Abtrennschaltung IA und deren Rückstell-Eingang mit dem Ausgangssignal C der Abtrennschaltung EA beaufschlagt ist. Solange kein Externvollbild-Kennimpuls C (Fig. 2) eintrifft, ist Q1 = 1.

Beim Vorhandensein des Mischimpulssignals Sas ist das Ausgangssignal Q2 der Extern-/Intern-Steuerung EIS ein «1»-Signal, daher Q2 = 1. Im nichtsynchronisierten Zustand ist das Ausgangssignal Q1 des Vergleichers VG ein «1»-Signal, daher Q1 = 1. Mit Q1 = 1 und Q2 = 1 gelangt das Signal H einerseits vom Eingang 21 über den Ausgang 5 des Umschalters ZU zum Eingang 30 und anderseits direkt zum Eingang 20 der Nachlaufsteuerung PV, die zwar ein Taktfrequenzsignal Ts abgibt, das über den Umschalter EIU und den HF-Teiler HFT zum Eingang des Schalters RU gelangt, welcher aber gesperrt ist. Jedesmal aber, wenn ein Externvollbild-Kennimpuls C (Fig. 2) beispielsweise mit der Frequenz von 25 Hz am Rückstell-Eingang der D-Kippstufe VG erscheint, wird durch das Signal Q1 = 0 an deren Ausgang der Schalter RU geöffnet, der Video-Taktgenerator VT in Betrieb gesetzt und das Signal H' über den Eingang 24 des Umschalters ZU zum Eingang 30 der Nachlaufsteuerung PV geführt, welche die Signale H und H' vergleicht und synchronisiert.

Ist einmal der Synchronisierungszustand erreicht, so ergibt sich eine Koinzidenz zwischen den beiden Vollbild-Kennimpulsen C und C' des Vergleichers VG, was zur Folge hat, dass Q1 = 0 bleibt und somit der Synchronisierungszustand aufrechterhalten wird.

Durch diese Schaltung erreicht man daher zugleich eine Zeilensynchronisierung über die Nachlaufsteuerung PV und eine Vollbildsynchronisierung über den Vergleicher VG.

Der Umschalter ZU kann auch derart aufgebaut sein, dass der Anschluss 23 des ersten NAND-Gliedes über einen in der Fig. 3 nicht dargestellten Inverter mit dem Anschluss 22 des zweiten NAND-Gliedes verbunden ist. In einem solchen Fall wäre der Anschluss 23 des ersten NAND-Gliedes der einzige Steuereingang des Zeilenimpuls-Umschalters ZU. Entsprechendes gilt für den Extern-/Intern-Umschalter EIU.

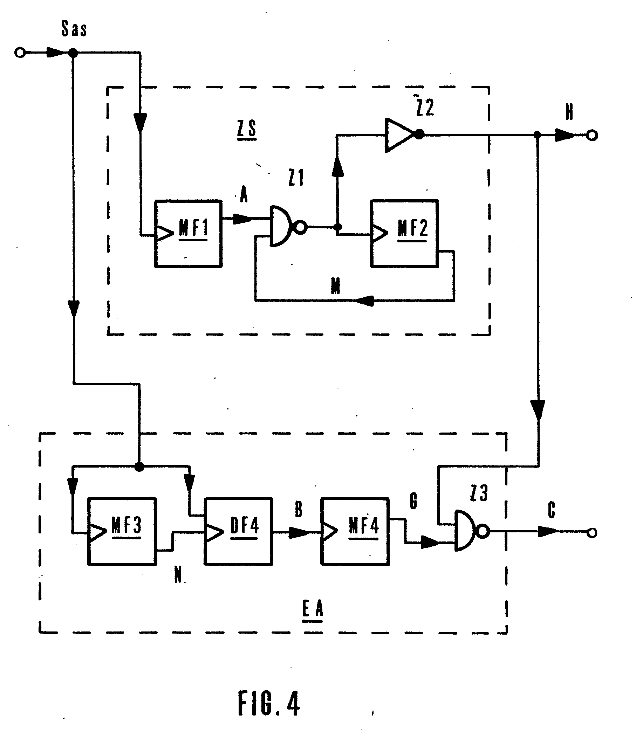

Die Zeilenimpuls-Abtrennschaltung ZS nach Fig. 4 weist eine erste monostabile Kippstufe MF1 auf, deren Takteingang mit dem Mischimpulssignal Sas = Sa1, Sa2 beaufschlagt und deren Ausgangssignal A = A1, A2 dem ersten Eingang eines NAND-Gliedes Z1 zugeführt ist. Der Ausgang des NAND-Gliedes Z1 ist einerseits mit dem Eingang eines Inverters Z2 und anderseits mit dem Takteingang einer zweiten monostabilen Kippstufe MF2 verbunden, deren invertiertes Ausgangssignal M = M1, M2 dem zweiten Eingang des NAND-Gliedes Z1 zugeführt wird. Der Ausgang des Inverters Z2 gibt das Signal H = H1, H2 ab.

Die Signale Sa1, A1, M1 und H1 entsprechen dem ersten Halbbild und sind in Fig. 2 dargestellt. Die Signale Sa2, A2, M2 und H2 entsprechen dem zweiten Halbbild. Die Signale A2 und M2 sind in Fig. 2 nicht dargestellt, können aber entsprechend aus dem Mischimpulssignal Sa2 (Fig. 2) abgeleitet werden.

Das Signal A1 besteht aus Impulsen mit einer Impulsbreite von beispielsweise 8 µs, die der Zeitkonstante der ersten monostabilen Kippstufe MF1 entspricht. Das Signal M1 besteht aus Impulsen mit einer Pausenbreite von angenähert T = 48 µs, die der Zeitkonstante der zweiten monostabilen Kippstufe MF2 entspricht. Das Signal H1 besteht aus Impulsen, die sich mit einer Periode der Dauer t wiederholen. Dabei gilt die Beziehung

$$t/2 < T < t$$

Die Externvollbild-Kennimpuls-Abtrennschaltung EA nach Fig. 4 weist eine erste, über einen Takteingang mit dem Mischimpulssignal Sas = Sa1, Sa2 beaufschlagte monostabile Kippstufe MF3 und eine zweite, über einen Takteingang mit dem Ausgangsimpulssignal B = B1, B2 einer D-Kippstufe DF4 beaufschlagte monostabile Kippstufe MF4 auf. Dabei sind der D-Kippstufe DF4 über ihren D-Eingang das Mischimpulssignal Sas und über ihren Takteingang das invertierte Ausgangsimpulssignal N der monostabilen Kippstufe MF3 zugeführt. In der Abtrennschaltung EA ist zudem ein NAND-Glied Z3 vorhanden, dessen erster Eingang mit dem Impulssignal H = H1, H2 und dessen zweiter Eingang mit dem Ausgangsimpulssignal G der monostabilen Kippstufe MF4 beaufschlagt ist und dessen Ausgangsimpulssignal der Externvollbild-Kennimpuls C ist.

Die Signale N1, B1 und G1 entsprechen dem ersten Halbbild und sind in Fig. 2 dargestellt.

Das Signal N1 besteht aus Impulsen verschiedener Breite, zwischen denen Pausen von zumindest angenähert 15 µs vorhanden sind; diese Pausendauer entspricht der Zeitkonstante der monostabilen Kippstufe MF3. Beim Eintreffen des ersten breiten Bildsynchronimpulses am D-Eingang der D-Kippstufe DF4 zusammen mit einem Impuls N1 am Takteingang der D-Kippstufe DF4 im Augenblick p kippt diese um und gibt ein Ausgangsimpulssignal B1 = 1 ab. Dieser Zustand dauert so lange, bis die breiten Bildsynchronimpulse verschwunden sind. Die monostabile Kippstufe MF4 verkürzt den so gewonnenen Impuls G1 auf eine Breite von zumindest angenähert 32 µs, entsprechend ihrer Zeitkonstante. Aus den Impulssignalen H und G wird nur für jedes Vollbild ein Kennimpuls C mit Hilfe des NAND-Gliedes Z3 ausgetastet, der im Vergleicher VG verarbeitet wird.

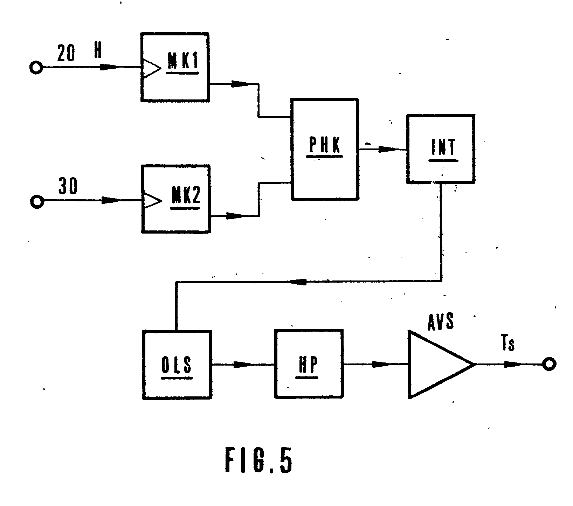

Die Nachlaufsteuerung PV nach Fig. 5 weist einen Phasenkomparator PHK auf, dessen erster Eingang mit dem invertierenden Ausgang einer ersten, eingangsseitig mit dem Signal H beaufschlagten monostabilen Kippstufe MK1 und dessen zweiter Eingang mit dem invertierenden Ausgang einer zweiten, eingangsseitig mit dem Signal H' oder, wenn der Vollbildsynchronismus noch nicht erreicht ist, mit dem Signal H selbst beaufschlagten monostabilen Kippstufe MK2 verbunden ist.

Der Ausgang des Phasenkomparators PHK ist über die Reihenschaltung eines Integrators INT, einer Oszillator-Schaltung OLS und eines Hochpassfilters HP mit dem Eingang einer Ausgangs-Verstärkerschaltung AVS verbunden. Dabei kann als Hochpassfilter auch ein Kondensator dienen. Zwischen dem Ausgang des Integrators INT und dem Bezugspotential kann eine Zenerdiode eingefügt sein.

In den monostabilen Kippstufen MK1 und MK2 wird die Breite der Impulse H bzw. H' vergrössert, um zumindest angenähert ein Impulstastverhältnis von 1:1 zu erreichen.

Für die Synchronisierung eines Fernsehbildes sind die vorderen Synchronimpulsflanken massgebend. Da der Phasenkomparator PHK den Impulsvergleich mit den hinteren Impulsflanken durchführt, werden in den monostabilen Kippstufen MK1 und MK2 zugleich die erweiterten Impulse invertiert. Der Phasenkomparator PHK liefert dem Integrator INT die aus dem Phasenvergleich abgeleitete Fehlerspannung. Die Oszillator-Schaltung OLS weist einen spannungsabhängigen Oszillator und eine Varaktor-Diode auf, die in der Fig. 5 nicht dargestellt sind. Eine solche Schaltung ist beispielsweise in den Datenblättern MC 1648 von Motorola (1972) beschrieben. Das Ausgangssignal Ts der Ausgangs-Verstärkerschaltung AVS muss eine relativ hohe Frequenz aufweisen, wenn es zur Synchronisierung von Videotaktoszillatoren dienen soll, die verschiedenen Normen entsprechen. In diesem Fall ist es notwendig, in der Synchronisierschaltung VSS mindestens einen Taktteiler HFT oder NFT (Fig. 3) vorzusehen.

Wenn das Ausgangssignal Q1 des Vergleichers VG ein «1»-Signal ist, wird an den Eingängen 20 und 30 der Nachlaufsteuerung PV das Signal H mit sich selbst verglichen. Damit wird erreicht, dass der in der Nachlaufsteuerung PV enthaltene spannungsabhängige Oszillator nicht weit von der Sollfrequenz abweichen kann, so dass beim Schliessen der Regelschleife (PLL-Schleife) das Einrasten in die Sollfrequenz unproblematisch ist. Denselben Effekt könnte man mit Hilfe eines Haltekreises in der Nachlaufsteuerung PV erreichen. Dadurch wäre der Umschalter ZU nicht notwendig, da der Eingang 8 der Internvollbild-Kennimpuls-Abtrennschaltung IA direkt mit dem Eingang 30 der Nachlaufsteuerung PV verbunden werden könnte.

## Patentansprüche

1. Synchronisierschaltung zur Erzeugung eines Synchronisiersignals mit einem Video-Taktgenerator (VT), der ein internes Horizontalimpulssignal (H') erzeugt, das in einer Vergleicherschaltung (EA, VG, IA) mit einem aus einem extern zugeführten Mischimpulssignal (Sas) gewonnenen Extern-Horizontalimpulssignal (H) verglichen wird, wobei das Ausgangssignal des Vergleichers zur Steuerung des Synchronisiersignals dient, dadurch gekennzeichnet, dass der Video-Taktgenerator (VT) zusätzlich ein internes Mischimpulssignal (Sas') erzeugt, das einem weiteren Eingang (9) der Vergleicherschaltung (EA, VG, IA) zugeführt wird, dass ferner das Synchronisiersignal ein Taktfrequenzsignal (Ts) ist, das in einer Nachlaufsteuerung (PV) erzeugt wird, deren Referenzeingang (20) mit dem Extern-Horizontalimpulssignal (H) und deren Vergleichseingang (30) mit dem internen Horizontalimpulssignal (H') beaufschlagt ist, wobei das Ausgangssignal (Ts) der Nachlaufsteuerung (PV) über einen Regelimpuls-Schalter (RU) dem Eingang des Videotaktgenerators (VT) zugeführt wird, und dass der Regeleingang (31) des Regelimpuls-Schalters (RU) mit dem Ausgang (Q1) der Vergleicherschaltung (EA, VG, IA) verbunden ist, womit beide internen Impulssignale (Sas' und H') in einem festen Frequenzverhältnis mit dem Taktfrequenzsignal (Ts) synchronisiert und daher auch extern brauchbar sind.

2. Synchronisierschaltung nach Anspruch 1, dadurch gekennzeichnet, dass der Ausgang der Vergleicherschaltung (EA, VG, IA) der Ausgang eines Vergleichers (VG) ist, der eingangsseitig einerseits mit dem Ausgang einer eingangsseitig mit den Ausgangssignalen des Video-Taktgenerators (VT) beaufschlagten Internvollbild-Kennimpuls-Abtrennschaltung (IA) und anderseits mit dem Ausgang einer Externvollbild-Kennimpuls-Abtrennschaltung (EA) verbunden ist, die eingangsseitig sowohl mit dem externen Mischimpulssignal (Sas) als auch mit dem aus diesem Signal (Sas) in einer Zeilenimpuls-Abtrennschaltung (ZS) gewonnenen Extern-Horizontalimpulssignal (H) beaufschlagt ist.

3. Synchronisierschaltung nach Patentanspruch 2, dadurch gekennzeichnet, dass die Nachlaufsteuerung (PV) über einen Extern-/Intern-Umschalter (EIU) derart mit einem zweiten Eingang (32) des Regelimpuls-Schalters (RU) verbunden ist, dass der Ausgang (10) der Nachlaufsteuerung (PV) an den ersten Eingang (41) des Extern-/Intern-Umschalters (EIU) angeschlossen ist, dessen zweiter Eingang (42) mit dem Ausgangssignal (Tf) der Taktimpulsquelle (TG) beaufschlagt und dessen Ausgang (7) mit dem zweiten Eingang (32) des Regelimpuls-Schalters (RU) verbunden ist, welcher einen dritten Eingang (33) aufweist, der mit einem Steuereingang (43) des Extern-/Intern-Umschalters (EIU) und mit dem Ausgang einer Extern-/Intern-Steuerung (EIS) verbunden ist, die das Vorhandensein eines Mischimpulssignals (Sa) am Eingang der Synchronisierschaltung erkennt.

4. Synchronisierschaltung nach Patentanspruch 3, dadurch gekennzeichnet, dass zwischen dem Ausgang (7) des Extern-/Intern-Umschalters (EIU) und dem Eingang des Video-Taktgenerators (VT) mindestens ein Taktteiler (HFT bzw. NFT) eingefügt ist.

5. Synchronisierschaltung nach einem der Patentansprüche 1 bis 4, dadurch gekennzeichnet, dass der Video-Taktgenerator (VT) einen Fernsehtaktgeber (FST) aufweist, dessen Horizontalimpulssignalausgang mit dem D-Eingang einer ersten D-Kippstufe (DF1) und dessen Mischimpulssignalausgang mit dem D-Eingang einer zweiten D-Kippstufe (DF2) verbunden ist.

6. Synchronisierschaltung nach einem der Patentansprüche 2 bis 5, dadurch gekennzeichnet, dass das externe Horizontalimpulssignal (H) dem ersten Eingang (21) eines Zeilenimpuls-Umschalters (ZU) zugeführt ist, dessen Steuereingang (23) mit dem Ausgangssignal (Q1) des Vergleichers (VG) beaufschlagt ist, und dass der Vergleichseingang (30) der Nachlaufsteuerung (PV) über einen weiteren Eingang (24) des Zeilenimpuls-Umschalters (ZU) mit dem internen Horizontalimpulssignal (H') beaufschlagt ist.

7. Synchronisierschaltung nach Patentanspruch 6, dadurch gekennzeichnet, dass der Zeilenimpuls-Umschalter (ZU) zwei UND-Glieder aufweist, deren Ausgänge über ein ODER-Glied zusammengefasst sind, wobei ein als ein erster Steuereingang des Zeilenimpuls-Umschalters (ZU) dienender Eingang eines dieser UND-Glieder mit dem nichtinvertierten Ausgangssignal (Q1) des Vergleichers (VG) und ein als ein zweiter Steuereingang des Zeilenimpuls-Umschalters (ZU) dienender Eingang des anderen UND-Gliedes mit dem invertierten Ausgangssignal (Q1) des Vergleichers (VG) beaufschlagt ist.

8. Synchronisierschaltung nach einem der Patentansprüche 1 bis 7, dadurch gekennzeichnet, dass die Nachlaufsteuerung (PV) einen Phasenkomparator (PHK) aufweist, welcher eingangsseitig einerseits mit dem Ausgang einer ersten monostabilen Kippstufe (MK1) und anderseits mit dem Ausgang einer zweiten monostabilen Kippstufe (MK2) verbunden ist, und welcher ausgangsseitig über die Reihenschaltung eines Integrators (INT), einer Oszillator-Schaltung (OLS), eines Hochpassfilters (HP) und einer Ausgangs-Verstärkerschaltung (AVS) das Taktfrequenzsignal (Ts) abgibt.

9. Synchronisierschaltung nach einem der Patentansprüche 2 bis 8, dadurch gekennzeichnet, dass die Zeilenimpuls-Abtrennschaltung (ZS) eine erste monostabile Kippstufe (MF1) aufweist, deren Takteingang mit dem Mischimpulssignal (Sas = Sa1, Sa2) beaufschlagt und deren Ausgangssignal (A = A1, A2) dem ersten Eingang eines NAND-Gliedes (Z1) zugeführt ist, wobei der Ausgang dieses NAND-Gliedes (Z1) einerseits mit dem Eingang eines Inverters (Z2) und anderseits mit dem Takteingang einer zweiten monostabilen Kippstufe (MF2) verbunden ist, deren invertiertes Ausgangssignal (M = M1, M2) dem zweiten Eingang des NAND-Gliedes (Z1) zugeführt wird, und dass der Ausgang des Inverters (Z2) das Horizontalimpulssignal (H = H1, H2) abgibt.

10. Synchronisierschaltung nach einem der Patentansprüche 2 bis 9, dadurch gekennzeichnet, dass die Externvollbild-Kennimpuls-Abtrennschaltung (EA) eine erste, über einen Takteingang mit dem Mischimpulssignal (Sas = Sa1, Sa2) beaufschlagte monostabile Kippstufe (MF3) und eine zweite, über einen Takteingang mit dem Ausgangsimpulssignal (B = B1, B2) einer D-Kippstufe (DF4) beaufschlagte monostabile Kippstufe (MF4) aufweist, wobei der D-Kippstufe (DF4) über ihren D-Eingang das Mischimpulssignal (Sas) und über ihren Takteingang das invertierte Ausgangsimpulssignal (N) der monostabilen Kippstufe (MF3) zugeführt sind, und dass in der Externvollbild-Kennimpuls-Abtrennschaltung (EA) zudem ein NAND-Glied (Z3) vorhanden ist, dessen erster Eingang mit dem Horizontalimpulssignal (H = H1, H2) und dessen zweiter Eingang mit dem Ausgangsimpulssignal (G) der monostabilen Kippstufe (MF4) beaufschlagt ist und dessen Ausgangsimpulssignal der Externvollbild-Kennimpuls (C) ist.

## Claims

1. A synchronising circuit for the generation of a synchronising signal, comprising a video clock pulse generator (VT) which generates an internal horizontal pulse signal (H') which is compared in a comparator circuit (EA, VG, IA) with an external horizontal pulse signal (H) obtained from a mixed pulse signal (Sas) supplied from a remote source, the output signal from the comparator serving to control the synchronising signal, characterised in that the video clock pulse generator (VT) additionally generates an internal mixed pulse signal (Sas') fed to a further input (9) of the comparator circuit (EA, VG, IA), the synchronising signal forming a clock frequency (Ts) generated in a phase-locked-loop circuit (PV) to whose reference input (20) is fed the external horizontal pulse signal (H) and to whose comparator input (30) is supplied the internal horizontal pulse signal (H'), the output signal (Ts) of the phase-locked-loop circuit (PV) being fed via a regulating pulse switch (RU) to the input (32) of the video clock pulse generator (VT), and the regulating input (31) of the regulating pulse switch (RU) being connected to the output (Q1) of the comparator circuit (EA, VG, IA) so that the two internal pulse signals (Sas' and H') are synchronised with the clock frequency signal (Ts) in a fixed frequency ratio and can therefore be used externally.

2. A synchronising circuit as claimed in Claim 1, characterised in that the output of the comparator circuit (EA, VG, IA) is formed by the output of a comparator (VG) having one input connected to the output of an internal full video synch-pulse separating circuit (IA) fed with output signals of the video clock pulse generator (VT) and another input connected to the output of an external full video synch-pulse separating circuit (EA) whose input is supplied both with the external mixed pulse signal (Sas) and with the external horizontal pulse signal (H) obtained from this signal (Sas) in a line pulse separating circuit (ZS).

3. A synchronising circuit as claimed in Claim 2, characterised in that the phase-locked-loop circuit (PV) is connected via an external/internal change over switch (EIU) to a second input (32) of the regulating pulse switch (RU) in such manner that the output (10) of the phase-locked-loop circuit (PV) is connected to the first input (41) of the external/internal change over switch (EIU) whose second input (42) is fed with the output signal (Tf) of the clock pulse source (TG) and whose output (7) is connected to the second input (32) of the regulating pulse switch (RU) which possesses a third input (33) connected to a control input (43) of the external/internal change over switch (EIU) and to the output of an external/internal control (EIS) which recognises the presence of a mixed pulse signal (Sa) at the input of the synchronising circuit.

4. A synchronising circuit as claimed in Claim 3, characterised in that at least one clock pulse divider (HFT or NFT) is interposed between the output (7) of the external/internal change over switch (EIU) and the input of the video clock pulse generator (VT).

5. A synchronising circuit as claimed in one of Claims 1 to 4, characterised in that the video clock pulse generator (VT) comprises a television clock pulse generator (FST) whose horizontal pulse signal output is connected to the D input of a first D-type flip-flop (DF1) and whose mixed pulse signal output is connected to the D input of a second D-type flip-flop (DF2).

6. A synchronising circuit as claimed in one of Claims 2 to 5, characterised in that the external horizontal pulse signal (H) is fed to the first input (21) of a line pulse change over switch (ZU) whose control input (23) is fed with the output signal (Q1) of the comparator (VG), and that the comparator input (30) of the phase-locked-loop circuit (PV) is supplied via a further input (24) of the line pulse change over switch (ZU) with the internal horizontal pulse signal (H′).

7. A synchronising circuit as claimed in Claim 6, characterised in that the line pulse change over switch (ZU) comprises two AND gates whose outputs are combined via an OR gate, where an input of one of these AND gates, serving as a first control input of the line pulse change over switch (ZU), is supplied with the non-inverted output signal (Q1) of the comparator (VG) and an input of the other AND gate, serving as a second control input of the line pulse change over switch (ZU), is supplied with the inverted output signal (Q1) of the comparator (VG).

8. A synchronising circuit as claimed in one of Claims 1 to 7, characterised in that the phase-locked-loop circuit (PV) possesses a phase comparator (PHK) whose input is connected to the output of a first monostable trigger stage (MK¹) and to the output of a second monostable trigger stage (MK2), and whose output emits the clock frequency signal (Ts) via the series arrangement of an integrator (INT), an oscillator circuit (OLS), a high pass filter (HP) and an output amplifier circuit (AVS).

9. A synchronising circuit as claimed in one of Claims 2 to 8, characterised in that the line pulse separating circuit (ZS) comprises a first monostable trigger stage (MF1) whose clock pulse input is fed with the mixed pulse signal (Sas = Sa1, Sa2) and whose output signal (A = A1, A2) is fed to the first input of a NAND gate (Z1), the output of this NAND gate (Z1) being connected to the input of an inverter (Z2) and to the clock pulse input of a second monostable trigger stage (MF2) whose inverted output signal (M = M1, M2) is supplied to the second input of the NAND gate (Z1), and the output of the inverter (Z2) emitting the horizontal pulse signal (H = H1, H2).

10. A synchronising circuit as claimed in one of Claims 2 to 9, characterised in that the external full video synch-pulse separating circuit (EA) comprises a first monostable trigger stage (MF3) fed via a clock pulse input with the mixed pulse signal (Sas = Sa1, Sa2), and further comprises a second monostable trigger stage (MF4) fed via a clock pulse input with the output pulse signal (B = B1, B2) of a D-type flip-flop (DF4), the D-type flip-flop (DF4) being fed via its D input with the mixed pulse signal (Sas) and via its clock pulse input with the inverted output pulse signal (N) of the monostable trigger stage (MF3), and the external full video synch-pulse separating circuit (EA) additionally containing a NAND gate (Z3) to whose first input is fed the horizontal pulse signal (H = H1, H2) and to whose second input is fed the output pulse signal (G) of the monostable trigger stage (MF4), and whose output pulse signal represents the external full video synch-pulse (C).

**Revendications**

1. Circuit de synchronisation pour produire un signal de synchronisation avec un générateur de cadence vidéo (VT) qui produit un signal impulsionnel de ligne intérieur (H′) qui est comparé dans un circuit comparateur (EA, VG, IA) avec un signal impulsionnel de ligne extérieur (H) obtenu à partir d'un signal impulsionnel de mélange (Sas) appliqué de l'extérieur, le signal de sortie du comparateur servant à commander le signal de synchronisation, caractérisé par le fait que le générateur de cadence vidéo (VT) produit, en plus, un signal de conversion interne (Sas′) qui est appliqué à une seconde entrée (9) du circuit comparateur (EA, VG, IA), qu'en outre le signal de synchronisation est un signal de fréquence de cadence (Ts) qui est produit dans une boucle à verrouillage de phase (PV) dont l'entrée de référence (20) reçoit le signal impulsionnel de ligne extérieur (H) et dont l'entrée de comparaison (30) reçoit le signal impulsionnel de ligne intérieur (H′), le signal de sortie (Ts) de la boucle à verrouillage de phase (PV) étant appliqué par l'intermédiaire d'un commutateur (RU) des impulsions de réglage, à l'entrée (32) du générateur de cadence vidéo (VT), et que l'entrée de régulation (31) du commutateur (RU) des impulsions de réglage est reliée à la sortie (Q1) du circuit comparateur (EA, VG, IA), en sorte que les deux signaux impulsionnels internes (Sas′ et H) sont synchronisés, dans un rapport de fréquences fixe avec le signal de fréquence de cadence et sont de ce fait également utilisables extérieurement.

2. Circuit de synchronisation selon la revendication 1, caractérisé par le fait que la sortie du circuit comparateur (EA, VG, IA) est la sortie d'un comparateur (VG) qui est reliée du côté entrée, d'une part avec la sortie du circuit de séparation (IA) de l'impulsion d'identification de l'image interne, recevant les signaux de sortie du générateur de cadence vidéo (VT), et, d'autre part à la sortie d'un circuit de séparation de l'impulsion d'identification de l'image externe, qui reçoit, du côté entrée, aussi bien le signal impulsionnel de mélange externe (Sas) que le signal impulsionnel de ligne externe (H) qui est obtenu à partir de ce signal (Sas) dans un circuit de séparation (ZS) des impulsions de ligne.

3. Circuit de synchronisation selon la revendication 2, caractérisé par le fait que la boucle à verrouillage de phase (PV) est reliée de telle façon, par l'intermédiaire d'un commutateur externe/interne (EIU) avec une seconde entrée (32) du commutateur (RU) des impulsions de réglage, que la sortie (10) de la boucle à verrouillage de phase (PV) est reliée à la première entrée (41) du commutateur externe/interne (EIU), dont la seconde entrée (42) reçoit le signal de sortie (Tf) de la source des impulsions de cadence (TG) et dont la sortie (7) est reliée à la seconde entrée (32) du commutateur (RU) des impulsions de réglage, lequel comporte une troisième entrée (33) qui est reliée à l'entrée de commande (43) du commutateur externe/interne (EIU) et à la sortie d'une commande externe/interne (EIS) qui reconnaît la présence d'un signal impulsionnel de mélange (Sa) à l'entrée du circuit de synchronisation.

4. Circuit de synchronisation selon la revendication 3, caractérisé par le fait qu'entre la sortie (7) du commutateur externe/interne (EIU) et l'entrée du générateur de cadence vidéo (VT) est inséré au moins un diviseur de cadence (HFT ou NFT).

5. Circuit de synchronisation selon l'une des revendications 1 à 4, caractérisé par le fait que le générateur de cadence vidéo (VT) comporte un générateur de cadence de téléviseur (FST), dont la sortie des signaux impulsionnels de ligne est reliée à l'entrée (D) d'un premier multivibrateur bistable de type D (DF1) et dont la sortie des signaux impulsionnels de mélange est reliée à l'entrée D d'un second multivibrateur bistable de type D (DF2).

6. Circuit de synchronisation selon l'une des revendications 2 à 5, caractérisé par le fait que le signal impulsionnel de ligne externe (H) est appliqué à la première entrée (21) d'un commutateur d'impulsions de ligne (ZU) dont l'entrée de commande (23) reçoit le signal de sortie (Q1) du comparateur (VG), et que l'entrée de comparaison (30) de la boucle à verrouillage de phase (PV) reçoit, par l'intermédiaire d'une autre entrée (24) du commutateur des impulsions de ligne (ZU), le signal impulsionnel de ligne interne (H').

7. Circuit de synchronisation selon la revendication 6, caractérisé par le fait que le commutateur (ZU) des impulsions de ligne comporte deux circuits ET, dont les sorties sont rassemblées par l'intermédiaire d'un circuit OU, une entrée de l'un de ces circuits ET, qui sert comme première entrée de commande du commutateur (ZU) des impulsions de ligne recevant le signal de sortie non inversé (Q1) du comparateur (VG), et une entrée de l'autre circuit ET et servant de seconde entrée de commande du commutateur (ZU) des impulsions de ligne recevant le signal de sortie inversé (Q1) du comparateur (VG).

8. Circuit de synchronisation selon l'une des revendications 1 à 7, caractérisé par le fait que la boucle à verrouillage de phase (PV) comporte un comparateur de phase (PHK) qui est relié, du côté entrée, d'une part avec la sortie d'un premier multivibrateur monostable (MK1) et d'autre part à la sortie d'un second multivibrateur monostable (MK2), et qui, du côté sortie émet, par l'intermédiaire du circuit série constitué par un intégrateur (INT), par un circuit oscillateur (OLS), par un filtre passe-haut (HP) et par un circuit amplificateur de sortie (AVS), le signal de fréquence de cadence (Ts).

9. Circuit de synchronisation selon l'une des revendications 2 à 8, caractérisé par le fait que le circuit de séparation (ZS) des impulsions de ligne comporte un premier multivibrateur monostable (MF1), dont l'entrée de cadence reçoit le signal impulsionnel de mélange (Sas = Sa1, Sa2) et dont le signal de sortie (A = A1, A2) est appliqué à la première entrée d'un circuit NON-ET (Z1), la sortie de ce circuit NON-ET (Z1) étant reliée d'une part à l'entrée d'un inverseur (Z2) et d'autre part à l'entrée de cadence d'un second multivibrateur monostable (MF2), dont le signal de sortie inversé (M = M1, M2) est appliqué à la seconde entrée du circuit NON-ET (Z1), et que la sortie de l'inverseur (Z2) émet le signal impulsionnel de ligne (H = H1, H2).

10. Circuit de synchronisation selon l'une des revendications 2 à 9, caractérisé par le fait que le circuit de séparation (EA) des impulsions d'identification d'image externe comporte un premier multivibrateur monostable (MF3) recevant, par l'intermédiaire d'une entrée de cadence, le signal impulsionnel de mélange (Sas = Sa1, Sa2) et un second multivibrateur monostable (MF4) recevant, par l'intermédiaire d'une entrée de cadence, le signal impulsionnel de sortie (B = B1, B2) d'un multivibrateur bistable de type D (DF4), le multivibrateur bistable de type D (DF4) recevant, par l'intermédiaire de son entrée D, le signal impulsionnel de mélange (Sas) et, par l'intermédiaire de son entrée de cadence, le signal impulsionnel de sortie inversé (N) du multivibrateur monostable (MF3), et que dans le circuit de séparation (EA) des impulsions d'identification de l'image externe est, de plus, prévu un circuit NON-ET (Z3) dont la première entrée reçoit le signal impulsionnel de ligne (H = H1, H2) et dont la seconde entrée reçoit le signal impulsionnel de sortie (G) du multivibrateur monostable (MF4), et dont le signal impulsionnel de sortie est le signal d'identification de l'image externe (C).

FIG. 1

FIG. 2

FIG. 3

FIG. 4

FIG.5